(19) Europäisches Patentamt
European Patent Office
Office européen des brevets

(11) **EP 0 604 294 B1**

(12) **FASCICULE DE BREVET EUROPEEN**

(45) Date de publication et mention
de la délivrance du brevet:
**10.11.1999 Bulletin 1999/45**

(51) Int Cl.6: **H04B 1/66**, H04K 1/02

(21) Numéro de dépôt: **93403102.2**

(22) Date de dépôt: **20.12.1993**

(54) **Composant pour émetteur-récepteur différentiel de signaux à étalement de spectre par séquence directe et émetteur-récepteur correspondant**

Bauelement für differentiellen Sende-Empfänger von Direktsequenz-Spreizspektrumsignalen und entsprechender Sende-Empfänger

Component for differential emitter-receiver of direct sequence spread spectrum signals and corresponding emitter-receiver

(84) Etats contractants désignés:
**BE DE ES GB IT NL**

(30) Priorité: **22.12.1992 FR 9215469**

(43) Date de publication de la demande:
**29.06.1994 Bulletin 1994/26**

(73) Titulaire: **COMMISSARIAT A L'ENERGIE ATOMIQUE**
**75015 Paris (FR)**

(72) Inventeurs:
• **Le Roy, Alain**
**F-38240 Meylan (FR)**
• **Penavaira, Louis**
**F-06300 Nice (FR)**
• **Fort, Charles**
**F-38470 Vatilieu (FR)**

(74) Mandataire: **Signore, Robert**
**c/o BREVATOME**
**3, rue du Docteur Lanceraux**
**75008 Paris (FR)**

(56) Documents cités:
EP-A- 0 409 538        EP-A- 0 474 491
FR-A- 2 312 881        US-A- 4 506 239

## Description

### Domaine technique

La présente invention a pour objet un composant pour émetteur-récepteur différentiel à étalement de spectre par séquence directe et un émetteur-récepteur à étalement de spectre par séquence directe.

### Etat de la technique

La technique de l'étalement de spectre est utilisée depuis de nombreuses années dans les radiocommunications militaires, essentiellement parce qu'elle permet d'établir des liaisons discrètes, d'interception difficile et résistantes aux brouillages. Deux techniques d'étalement sont utilisées de manière classique : l'étalement de spectre par saut de fréquence et l'étalement de spectre par séquence directe.

L'étalement de spectre par saut de fréquence (appelé également "évasion de fréquence") est la technique employée pour les applications militaires. Elle consiste à changer la fréquence porteuse radio le plus souvent possible (jusqu'à plusieurs centaines de fois par seconde) selon une loi qui n'est connue que des récepteurs amis. Cette loi, qui est gérée par une ou plusieurs séquences pseudo-aléatoires, constitue le code d'accès à la liaison.

Cette technique nécessite l'emploi de synthétiseurs de fréquence agiles. Elle est donc onéreuse et n'existe que peu d'applications dans le domaine civil.

L'autre technique, à étalement de spectre par séquence directe (ou, en abrégé, ESSD ou "Direct Sequence Spread Spectrum" (DSSS) en terminologie anglo-saxonne), consiste à transformer le signal à émettre, dont la bande spectrale est $B_S$, en un signal ayant les propriétés d'un bruit blanc, dont la bande spectrale est beaucoup plus importante $B_{ES}$. Cette opération d'étalement est réalisée en multipliant le message à transmettre par une séquence pseudoaléatoire formée de bits pouvant prendre les valeurs +1 ou -1. Si T est la période des éléments d'information à transmettre, et $T_C$ la durée d'un élément binaire de la séquence pseudoaléatoire (appelé également "chip"), on peut définir une grandeur fondamentale de la modulation à étalement du spectre, à savoir le gain de traitement N, par la relation :

$$N = (T/T_C) = (B_{ES}/B_S).$$

Ce gain de traitement peut varier suivant les cas de 10 à plusieurs dizaines de milliers, les valeurs classiques en radiocommunications ne dépassant jamais 1000.

Pour pouvoir retrouver l'information, le récepteur doit réaliser une opération de corrélation entre le message reçu et une séquence pseudo-aléatoire identique à celle qui a été utilisée pour réaliser l'opération d'étalement. Le récepteur doit donc connaître cette séquence, laquelle constitue la clé d'accès au message émis. Deux messages indépendants peuvent être transmis en utilisant la même bande de fréquence et deux séquences orthogonales, c'est-à-dire deux séquences ayant des coefficients d'intercorrélation faibles.

Les avantages de la technique à étalement de spectre par séquence directe les plus fréquemment mis en avant sont les suivants :

-    la même bande de fréquence peut être partagée par les systèmes utilisant une modulation à bande étroite et ceux qui utilisent l'étalement de spectre ; les premiers ne constateront qu'une légère augmentation du bruit radioélectrique ambiant puisque les séquences d'étalement ont les caractéristiques spectrales d'un bruit alors que les seconds opéreront une réjection des modulations à bande étroite grâce à l'opération de corrélation ;

-    plusieurs liaisons à étalement de spectre peuvent partager la même bande de fréquence par utilisation de séquences pseudo-aléatoires orthogonales ; cette technique (qui porte le nom d'accès multiple à répartition par les codes ou AMRC en abrégé ou CDMA en anglais) est malheureusement difficile à mettre en oeuvre et impose une gestion de la puissance émise ;

-    une transmission à étalement de spectre est difficile à intercepter puisque le récepteur doit connaître la séquence d'étalement pour pouvoir démoduler les données correctement ; en fait, souvent, une connaissance partielle de la séquence suffit ;

-    une transmission à étalement de spectre est assez résistante vis-à-vis des brouilleurs et interférences et ceci d'autant plus que le gain de traitement est grand. En fait, il faut tempérer quelque peu cet avantage car, par rapport à une liaison à bande étroite et dans le cas d'une application civile où il ne faut prendre en compte que les interférences et ne pas considérer le cas des brouilleurs mal intentionnés ; en effet, en multipliant la bande par N, on intercepte une puissance de bruit due aux interférences N fois plus forte en moyenne que l'on réjecte avec un gain de traitement égal à N d'où une résistance vis-à-vis de ces interférences pas plus importante que pour les techniques classiques.

Mis à part une meilleure gestion du spectre radioélectrique (puisque cette technique permet de partager les mêmes bandes de fréquence que certaines émissions à bandes étroites), l'étalement de spectre par séquence directe ne paraît pas avoir beaucoup d'atouts. L'intérêt primordial de cette technique apparaît lorsqu'on analyse le comportement de cette modulation dans les canaux radio en présence de trajets multiples.

La technique de l'étalement de spectre par séquence directe trouve des applications dans les transmissions radioélectriques avec les véhicules automobiles, dans les réseaux locaux informatiques d'entreprise sans fil, les transmissions de données en milieu industriel et, plus généralement dans toutes les transmissions radio à l'intérieur des bâtiments.

Dans ce type d'environnement, la propagation de l'onde radioélectrique s'effectue selon des trajets multiples mettant en jeu des phénomènes de réflexion (sur les murs et cloisons), de diffraction (sur les arêtes) et de diffusion. De plus, dans le cas général, il n'y a pas de trajet direct entre l'émetteur et le récepteur.

Cette propagation par trajets multiples induit un certain nombre d'effets parasites qui détériorent la qualité de la transmission jusqu'à la rendre quelquefois inexploitable. Outre l'atténuation importante du signal radio lors de sa propagation (puisqu'il doit traverser des cloisons), les autres effets gênants sont :

a) L'élargissement de la réponse impulsionnelle du canal. Cet effet est lié au fait que tous les trajets possèdent des durées de propagation différentes, ce qui impose une valeur limite du débit d'informations dans le canal. La durée du symbole transmis doit être beaucoup plus élevée que cette largeur de réponse impulsionnelle pour obtenir un taux d'erreur raisonnable.

b) Les évanouissements ou "fading", qui ont pour origine une sommation vectorielle destructive du signal sur l'antenne de réception. Le niveau du signal reçu subit donc des fluctuations importantes lors du déplacement de l'antenne de réception. Ces fluctuations existent même avec des antennes fixes. Elles sont, dans ce cas, engendrées par les mouvements de véhicules ou de personnel dans le trajet radio. Ces évanouissements détériorent bien entendu la qualité de la transmission. Les techniques employées de manière classique pour améliorer cette qualité sont des techniques dites de diversité, qui consistent à utiliser plusieurs antennes de réception. L'augmentation du coût induit par l'adoption de ces techniques fait qu'elles sont utilisées essentiellement dans les systèmes militaires.

c) Le bruit Doppler ou modulation parasite de fréquence. Cet effet est d'autant plus gênant que le débit de données est faible. Il ne s'agit pas d'un décalage en fréquence mais bien d'un bruit, puisque les directions d'arrivée des différents trajets radio sont quelconques. Ce phénomène est d'autant plus fort que la fréquence radio et la vitesse des véhicules sont élevées.

Dans ce type de canal radio, la technique à étalement de spectre par séquence directe à modulation différentielle de phase permet d'assurer une bonne qualité de transmission, sous réserve de respecter quelques règles qui fixent les paramètres de modulation.

Ces techniques de tranmission sont décrites dans de nombreux ouvrages et articles. On peut citer, par exemple, l'ouvrage intitulé "Spread Spectrum Communications" par Marvin K. SIMON et al., Computer Science Press, 1983, vol. I et les articles suivants :

- "Design and experimental results for a direct-sequence spread-spectrum radio using differential phase shift keying modulation for indoor wireless communications", par M. KAVEHRAD et al., publié dans IEEE Journal on SAC, vol. SAC 5, n° 5, juin 1987, pp. 815-823,

- "Performance of differentially coherent digital communications over frequency-selective fading channels", par F.D. GARBER et al., publié dans IEEE Trans on communications, vol. 36, n° 1, janvier 1988, pp. 21-31,

- "Direct-sequence spread spectrum with DPSK modulation and diversity for indoor wireless communications", par M.K. KAVEHRAD et al., publié dans IEEE Trans on communications, vol. COM-35, n° 2, février 1987, pp. 224-236.

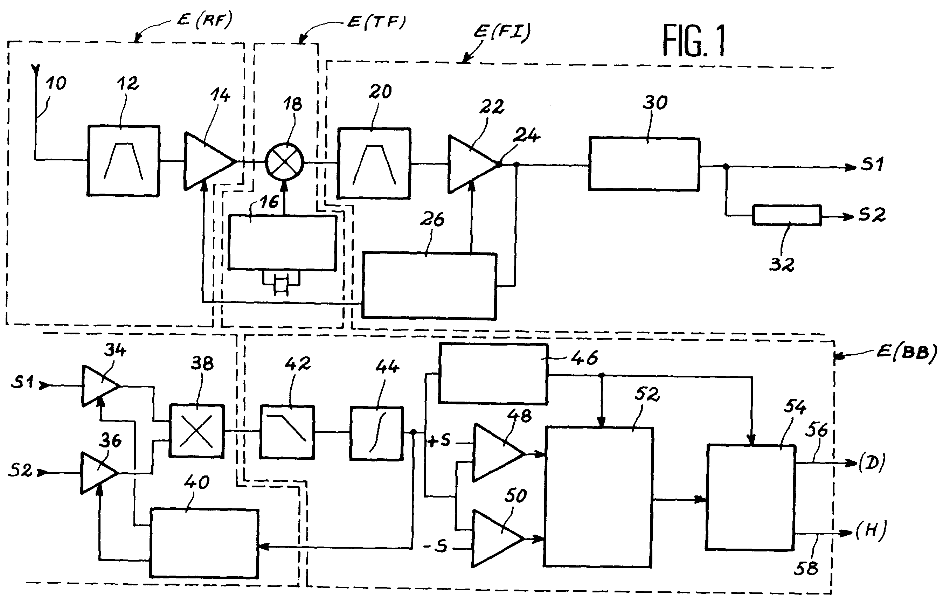

La figure 1 annexée illustre un récepteur connu apte à traiter les signaux à étalement de spectre par séquence directe. Ce récepteur comprend d'abord un étage radiofréquence, référencé E(RF), puis un étage à fréquence intermédiaire E(FI) et enfin un étage à bande de base E(BB).

L'étage radiofréquence E(RF) comprend une antenne de réception 10, un filtre 12 dont la bande est égale ou supérieure à $B_{ES}$, un amplificateur 14, un oscillateur local 16 fournissant une fréquence $F_{OL}$ et un mélangeur 18. Ce dernier délivre un signal à fréquence intermédiaire FI résultat du mélange de la fréquence incidente et de la fréquence de l'oscillateur local 16.

Le dispositif de traitement des signaux de fréquence intermédiaire comprend un filtre 20 dont la bande est toujours égale ou supérieure à $B_{ES}$ et un amplificateur 22 dont la sortie 24 est reliée à un circuit de contrôle de gain 26, destiné à ajuster automatiquement les gains des amplificateurs 14 et 22 de manière à ce que la puissance du signal à fréquence intermédiaire à la sortie 24 soit constante.

Le signal délivré par la sortie 24 est ensuite appliqué à un corrélateur 30, qui délivre sur sa sortie un signal S1 résultat de la corrélation entre le signal reçu et la séquence d'étalement utilisée à l'émission.

Ce signal de corrélation est, par ailleurs, appliqué à une ligne à retard 32, laquelle délivre un signal S2 identique à S1 mais décalé d'une durée égale à la période des éléments d'information à transmettre. Les deux signaux S1 et S2 sont ensuite appliqués à deux amplificateurs 34 et 36. Un circuit de contrôle de gain 40 règle le gain des amplificateurs 34 et 36.

La modulation utilisée étant une modulation différentielle de phase, l'information est portée par la différence de phase entre les signaux S1 et S2. L'extraction de cette information s'effectue à l'aide du multiplieur 38. Si le signal en sortie de ce circuit est positif, S1 et S2 sont en phase. S'il est négatif, ils sont en opposition de phase.

Quant à l'étage en bande de base, il comprend un filtre passe-bas 42 dont le rôle est de rejeter les harmoniques du mélange, et un intégrateur 44. Le rôle de cet intégrateur est primordial dans le cas d'une propagation par trajets multiples. Dans ce cas, à chaque trajet correspond un pic de corrélation en S1 et S2 et, donc, chaque trajet apporte de l'information. L'intégrateur 44 somme toutes les informations véhiculées par ces trajets. Il réalise donc l'opération de traitement de la diversité par trajets.

Les signaux en sortie de l'intégrateur 44 sont ensuite adressés à un circuit 46 pour la récupération de l'horloge et à deux comparateurs 48 et 50. Un circuit 52 de récupération des données délivre finalement les données D. On peut trouver enfin, comme dans la plupart des récepteurs de transmission de données, un module de détection et correction des erreurs de transmission 54.

Le circuit délivre finalement sur une sortie 56 les données (D) et sur une autre sortie 58 les impulsions d'horloge (H).

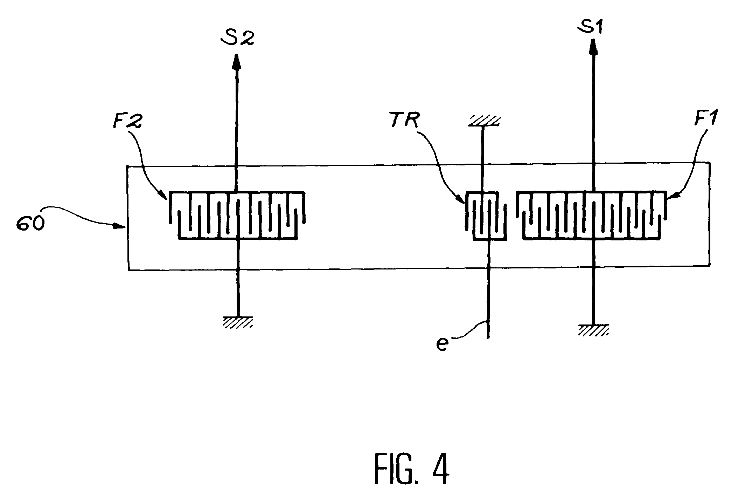

Le corrélateur 30 et la ligne à retard 32 peuvent être réalisés chacun sous forme de dispositif à ondes acoustiques de surface (SAW en abrégé pour "Surface Acoustic Waves"). C'est ce qui est décrit par exemple dans l'article de Mohsen KAVEHRAD et al. cité plus haut, (figure 4, page 817). Le corrélateur est en réalité un filtre adapté. Il est réalisé en dispositif à ondes de surface et est suivi d'un amplificateur dont la sortie est divisée en deux voies, l'une reliée à une ligne à retard réalisée en dispositif à ondes acoustiques de surface et l'autre, directement reliée à un multiplieur, qui reçoit par ailleurs le signal retardé.

De nombreux articles ont décrit les dispositifs à ondes acoustiques de surface, et notamment l'article intitulé "Practical Surface Acoustic Wave Devices" publié par Melvin G. HOLLAND et al., dans Proceedings of the IEEE, vol. 62, n° 5, Mai 1974, pp. 582-611. L'application aux communications à étalement de spectre est plus spécialement décrite dans l'article intitulé "Application of acoustic surface-wave technology to spread spectrum communications" publié par D.T. BELL et al. dans IEEE Trans on MTT, vol. MTT 21, n° 4, avril 1973, pp. 263-271.

Le filtre adapté ou corrélateur, qui réalise l'opération de corrélation, est composé, comme tout filtre à ondes acoustiques de surface, de deux transducteurs d'ondes de surface déposés sur un matériau piézoélectrique qui, dans le cas de signaux modulés en phase est généralement du quartz pour des raisons de stabilité en température des caractéristiques du composant (fréquence centrale notamment). Il est bien connu que la réponse impulsionnelle d'un tel dispositif est le produit de convolution des réponses impulsionnelles des deux transducteurs ; elle doit être égale, idéalement, à la renversée dans le temps du signal auquel le filtre doit être adapté. Les transducteurs sont du type "peignes interdigités" dont les électrodes (ou doigts) peuvent avoir des longueurs constantes ou variables en fonction de leur position. Ils sont réalisés par dépôt d'aluminium (épaisseur de quelques centaines à quelques milliers d'Angströms) sur le substrat utilisé. De tels composants sont décrits et proposés dans les catalogues de plusieurs fournisseurs de composants à ondes de surface. On peut ajouter que, dans le cas des filtres adaptés à des signaux codés en phase, comme c'est le cas pour le système récepteur décrit, les bandes passantes relatives requises sont généralement trop larges pour permettre l'emploi d'autres types de transducteurs que ceux connus classiquement et qui sont bidirectionnels. Les ondes acoustiques de surface autres que celles qui se propagent entre les deux transducteurs sont atténuées en déposant sur les zones situées entre chaque transducteur et le bord du substrat qui lui est le plus proche un matériau approprié (généralement une colle). On évite ainsi des signaux d'amplitude et de phase non maîtrisés dûs aux réflexions sur les bords du substrat.

Idéalement, la fonction de transfert de la ligne à retard doit être à amplitude constante et à phase linéaire (c'est-à-dire à retard constant) dans une bande de fréquence au moins égale à celle qui est occupée par le système du signal obtenu en sortie du filtre adapté afin de ne pas détériorer les caractéristiques de ce dernier. De plus, il faut que ce retard soit réalisé avec une grande précision et qu'il soit stable en température pour que la comparaison de phase entre deux pics de corrélation successifs soit valable.

La précision et la stabilité en température du retard nécessitent généralement l'emploi du quartz comme substrat piézoélectrique. Malheureusement, la bande passante de cette ligne à retard doit être tellement importante (130 MHz dans le cas qui nous intéresse pour une fréquence centrale de 261,12 MHz qu'il est pratiquement impossible d'envisager la réalisation d'une ligne à retard avec des distorsions de phase suffisamment faibles pour cette application.

Une solution décrite dans EP-A-0 409 538 consiste à utiliser des moyens aptes à remplir à la fois la fonction de corrélation et la fonction de retard, ces moyens utilisant deux corrélateurs analogues à ondes acoustiques de surface, le second étant décalé du premier d'une période correspondant à la durée d'un symbole d'information binaire reçu.

La présente invention va au-delà de ces techniques de réception en proposant un composant qui est capable de travailler non seulement en réception mais aussi en émission, ce qui simplifie grandement la réalisation d'un émetteur-récepteur utilisant la technique d'étalement de spectre par séquence directe.

**Exposé de l'invention**

De façon précise, la présente invention a pour objet un composant pour émetteur-récepteur différentiel de signaux à étalement de spectre par séquence directe, comprenant une voie de réception constituée par :

- un premier corrélateur apte à effectuer la corrélation entre un signal appliqué à son entrée et une séquence pseudoaléatoire identique à une séquence ayant servi dans une voie d'émission,
- un second corrélateur différencié uniquement par rapport au premier par le fait que le signal en sortie de ce corrélateur est retardé d'une période correspondant à la durée d'un symbole d'information binaire reçu, les premier et second corrélateurs étant des filtres dont la réponse impulsionnelle est la séquence pseudoaléatoire utilisée dans la voie d'émission mais renversée dans le temps,

caractérisé en ce qu'il comprend en outre ladite voie d'émission comprenant un filtre ayant une réponse impulsionnelle qui est ladite séquence pseudoaléatoire, le filtre de la voie d'émission étant constitué par un dispositif à ondes acoustiques de surface avec un transducteur d'entrée et un transducteur de sortie, le dispositif à ondes acoustiques de surface de la voie d'émission et le dispositif à ondes acoustiques de surface du premier corrélateur de la voie de réception étant disposés sensiblement symétriquement l'un de l'autre sur un même substrat piézo-électrique.

La présente demande a également pour objet un émetteur-récepteur différentiel à étalement de spectre. Cet émetteur-récepteur est caractérisé par le fait qu'il comprend le composant émetteur-récepteur qui vient d'être défini, ce composant étant utilisé dans sa voie d'émission pour produire un signal à fréquence intermédiaire à étalement de spectre, ce composant étant par ailleurs utilisé dans sa voie de réception comme dispositif de traitement du signal à fréquence intermédiaire apte à effectuer une corrélation avec la séquence pseudoaléatoire utilisée à l'émission. Cet émetteur-récepteur est en outre caractérisé par le fait que les moyens de la voie d'émission pour transposer le signal à fréquence intermédiaire en signal de radiofréquence sont les mêmes que les moyens de la voie de réception pour transposer le signal de radiofréquence en signal de fréquence intermédiaire

## Brève description des dessins

- la figure 1, déjà décrite, illustre un récepteur à étalement de spectre selon l'art antérieur ;
- la figure 2 montre un composant selon une variante de l'invention ;
- la figure 3 illustre un mode de réalisation de ce composant,
- la figure 4 montre un composant selon une autre variante ;
- la figure 5 montre un mode de réalisation du composant pour émetteur-récepteur différentiel ;

- la figure 6 montre un émetteur-récepteur différentiel selon l'invention.

## Exposé détaillé d'un mode de réalisation

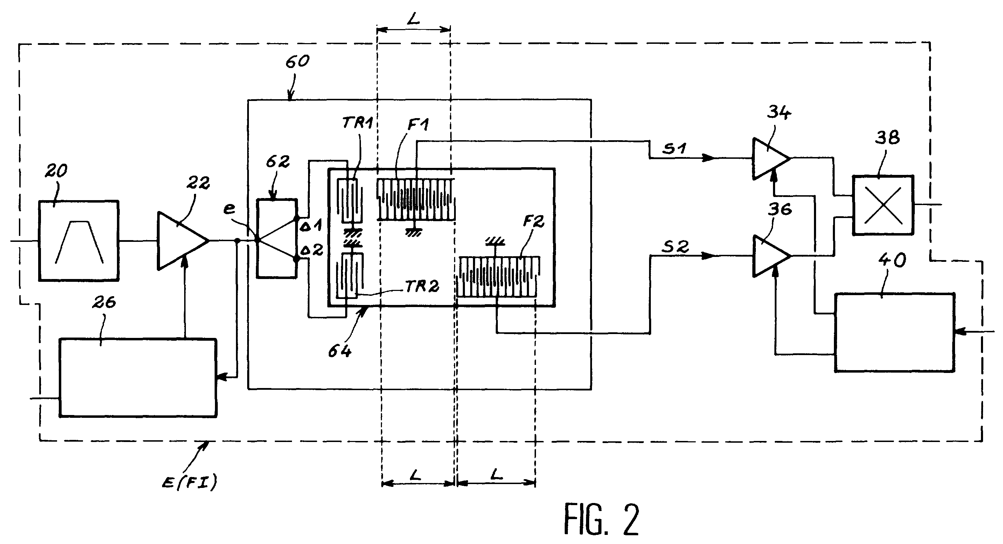

Le schéma de la figure 2 montre la place occupée par la partie réception du composant de l'invention dans un récepteur et plus particulièrement dans un étage à fréquence intermédiaire. Des éléments de cet étage ont déjà été représentés sur la figure 1 et portent, pour cette raison, les mêmes références. Il s'agit, en amont du filtre 20, de l'amplificateur 22 et du circuit de contrôle de gain 26 et, en aval, des deux amplificateurs 34, 36, du mélangeur 38 et du circuit de contrôle de gain 40. Le composant de l'invention porte la référence 60 et s'insère entre l'amplificateur 22 et les amplificateurs 34, 36. Il comprend un coupleur à 3 dB référencé 62, à une entrée e et deux sorties s1, s2, et un dispositif à ondes acoustiques de surface 64. Tel que représenté, ce dispositif comprend une première voie avec un transducteur d'entrée TR1 et un premier corrélateur C1 délivrant un signal S1 et une seconde voie avec un transducteur TR2 et un second corrélateur C2 délivrant un signal S2. Le deuxième corrélateur est décalé par rapport au premier, ce qui conduit à un retard de S2 sur S1.

Le fonctionnement de ce composant est le suivant. Le signal E à la fréquence intermédiaire est séparé en deux à l'aide du coupleur 62. Deux signaux identiques E1 et E2 sont donc créés avec des puissances égales à la moitié de celle du signal induit. Ces deux signaux sont ensuite filtrés par les filtres à ondes acoustiques de surface des deux voies. Les deux sorties S1 et S2 de ce filtre sont identiques à un retard près, la valeur de ce retard étant choisi pour être égal à la durée T du symbole binaire transmis. On a donc la relation suivante :

$$S2(t) = S1(t-T).$$

Ce filtre réalise également l'opération de corrélation entre le signal d'entrée et la séquence pseudoaléatoire utilisée pour étaler le spectre. On a, pour la voie 1 :

$$S1(t) = E1(t) * I(t)$$

où le signe * symbolise l'opération de convolution et I(t) la réponse impulsionnelle de la première voie du filtre. Cette réponse impulsionnelle en bande de base étant la séquence pseudo-aléatoire inversée dans le temps, S1 est le produit de corrélation entre EI et la séquence pseudo-aléatoire.

Le transducteur d'entrée peut être un peigne interdigité avec un nombre réduit d'électrodes, ceci de manière à avoir une bande passante suffisamment large. L'onde acoustique de surface (ou onde de RAYLEIGH) se propage à partir de ce transducteur à la surface du matériau piézoélectrique avec une vitesse de l'ordre de 3150 m/s. Elle passe ensuite sous l'électrode du corrélateur C1 dont la longueur correspond à la durée d'un élément binaire d'informations. Pour un système dont le débit de données est de 256 kb/s, la longueur de l'électrode de sortie vaut donc :

$$L = 3150/256.10^3,$$

soit L = 12,3 mm.

Chaque transducteur de sortie peut être constitué par un peigne interdigité à 255 éléments. Chaque élément constitué de plusieurs électrodes complémentaires correspond à l'un des chips de la séquence pseudo-aléatoire d'étalement. Ces éléments sont polarisés suivant la valeur du chip correspondant et, bien évidemment, le dernier chip de la séquence correspond à l'élément le plus proche de ce transducteur d'entrée. Lorsque le signal acoustique qui est modulé par la séquence pseudo-aléatoire se trouve en phase avec tous les éléments, le signal de sortie est maximal. On obtient donc, en sortie de ce filtre, une impulsion dont la largeur à mi-hauteur vaut 15 ns (durée d'un "chip") toutes les 3,9 μs (durée d'un bit d'information).

La seconde voie du composant à ondes acoustiques de surface diffère de la première par la position du transducteur de sortie. Les électrodes d'entrée et de sortie des deux voies sont identiques, mais le transducteur de sortie du second corrélateur est placé à une distance telle du transducteur d'entrée que le signal S2 soit retardé d'une durée T correspondant à un bit d'information par rapport à S1 de manière à réaliser la relation S2(t) = S1(t-T). Ce retard doit être réalisé avec une extrême précision, mais surtout, cette précision doit être valable dans toute la bande de fréquence utilisée par la modulation à étalement de spectre. Or, dans l'exemple de réalisation qui a été considéré, le transducteur de sortie de la deuxième voie a été optimisé pour prendre en compte les atténuations et les distorsions engendrées par la propagation des ondes acoustiques sur le substrat de manière à ce que la relation $S_2(t) = S_1(t-T)$ soit vérifiée dans toute la bande de fréquence considérée. On peut donc, par ce biais, réaliser un retard parfait.

Par ailleurs, la précision sur le retard doit être très grande. En effet, les deux signaux S1 et S2 ont une fréquence centrale égale à la fréquence intermédiaire du récepteur qui est, dans l'exemple considéré, de 261,12 MHz soit quatre fois la fréquence "chip". Or, il s'agit de comparer la phase des signaux S1 et S2 puisque l'information est véhiculée par la différence de phase entre ces deux signaux. Pour que cette comparaison soit valable, il faut donc que l'erreur sur le retard n'entraîne pas une erreur sur la phase supérieure à une dizaine de degrés à la fréquence de 261,12 MHz. Ceci correspond à une erreur sur le retard maximale d'une centaine de picosecondes pour un retard de 3,9 microsecondes.

Le composant ayant une gamme de température de fonctionnement qui peut varier dans une fourchette de plus de 50°C, il ne faut pas que le retard puisse fluctuer de plus de 100 ps dans toute la gamme.

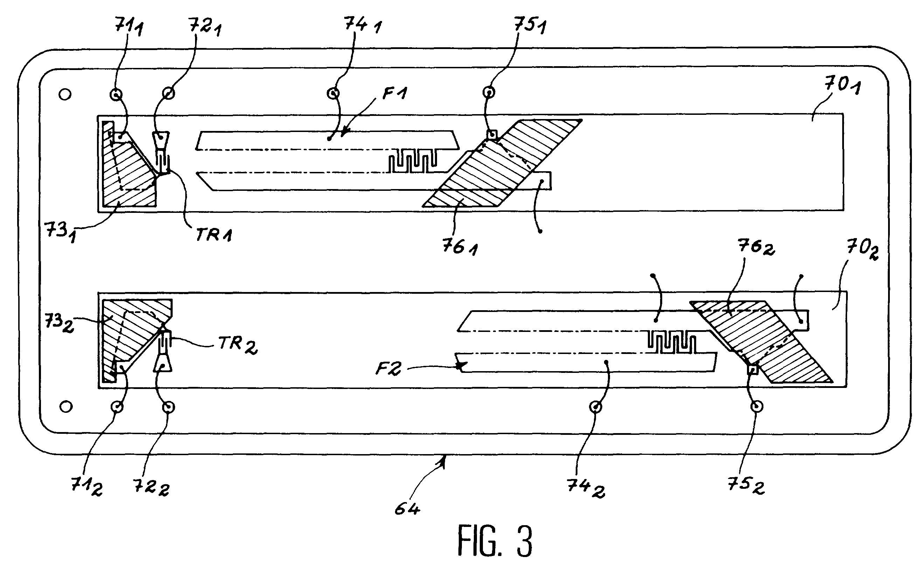

La figure 3 montre un mode de réalisation du dispositif à ondes acoustiques de surface. Ce dispositif comprend deux voies similaires dont les éléments sont repérés par des références portant respectivement les indices 1 et 2. Il suffit d'en décrire une. La première voie comprend une lame $70_1$ servant de substrat piézoélectrique. Cette lame est de préférence en quartz, avec une coupe ST. Le transducteur d'entrée $TR_1$ est relié à une borne de masse $71_1$ et à une borne d'entrée $72_1$. Un absorbant acoustique $73_1$ est disposé sur la partie gauche du transducteur. Seule l'onde acoustique se propageant vers la droite est donc utilisée. Le transducteur F1 a l'une de ses électrodes reliée à une borne de sortie $74_1$ et l'autre à un plot de masse $75_1$. Un absorbant acoustique $76_1$ est disposé à l'arrière du transducteur de sortie.

La seconde voie est similaire à la première, si ce n'est que le second transducteur de sortie est décalé en aval sur sa lame piézoélectrique, comme déjà exposé et qu'il a été optimisé pour prendre en compte des distorsions de propagation.

Sur la figure 4, on voit une autre variante d'une partie du composant de l'invention avec un transducteur d'entrée unique TR, relié à une entrée unique e. Deux ondes de surfaces partent de ce transducteur, l'une à droite vers le transducteur de sortie F1, l'autre à gauche vers le transducteur de sortie F2, le second étant plus éloigné de TR que ne l'est le premier.

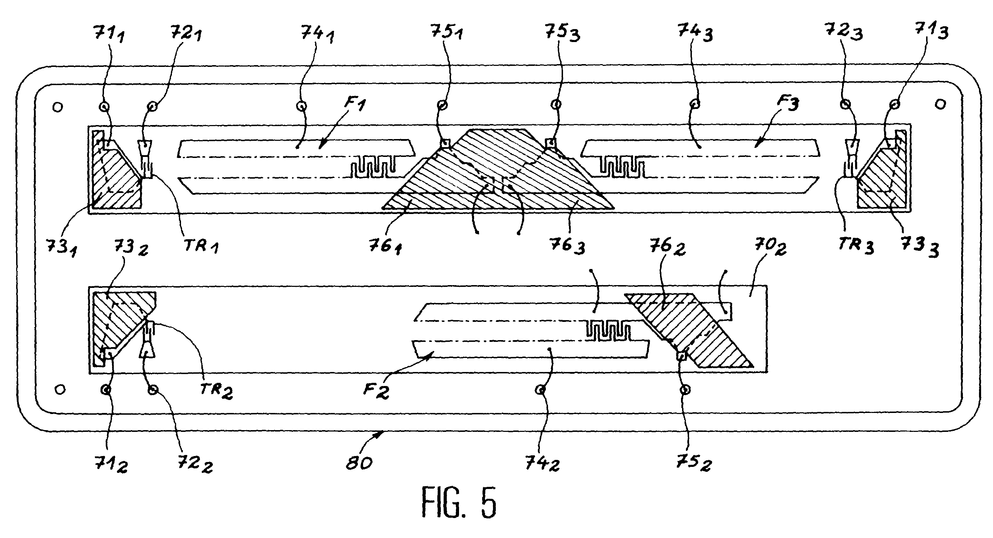

La figure 5 représente un mode de réalisation d'un composant 80 pour émetteur-récepteur selon l'invention. La voie réception de ce composant 80 correspond au mode de réalisation du composant pour récepteur illustré sur la figure 3. On comprend, en examinant cette figure 3, qu'il est particulièrement simple d'utiliser la place laissée libre sur la lame piézo-électrique $70_1$ (en haut à droite sur la figure 3) pour disposer un troisième filtre à ondes acoustiques de surface qui va pouvoir servir à l'émission, ce filtre pouvant être analogue à ceux de la voie de réception.

Dans le cas illustré, le filtre d'émission comprend sur la lame piézoélectrique $70_1$ supportant la première voie de réception, un transducteur d'entrée TR3 relié à une borne de masse $71_3$ et à une borne d'entrée $72_3$, un absorbant acoustique $73_3$ disposé sur la droite du transducteur, un transducteur de sortie F3 dont l'une des électrodes est reliée à une borne de sortie $74_3$ et l'autre à un plot de masse $75_3$ et enfin, un absorbant acoustique $76_3$ disposé à l'arrière du transducteur de sortie. Cet absorbant acoustique $76_3$ se confond avec l'absorbant acoustique $76_1$ du transducteur F1 de la première voie de réception.

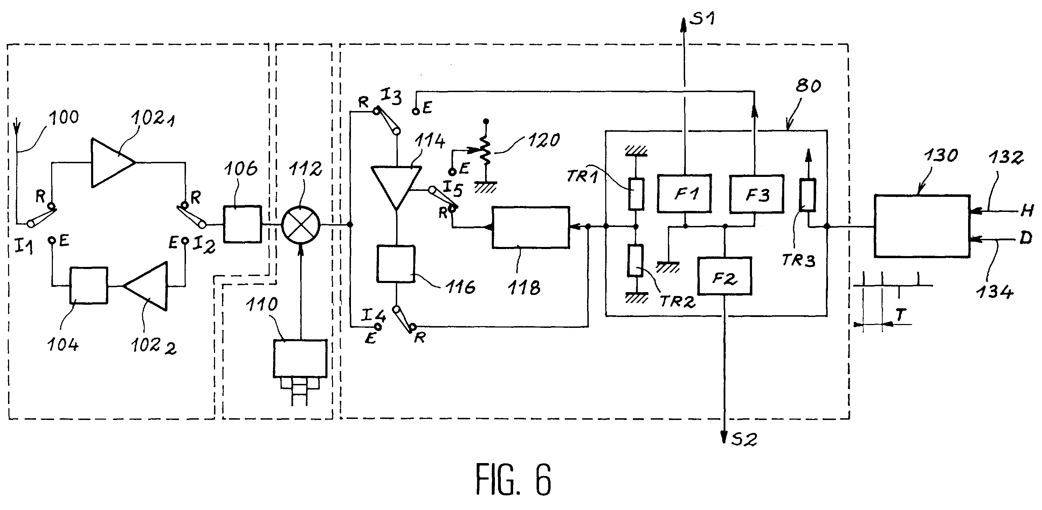

Le composant 80 de la figure 5 peut être utilisé dans un émetteur-récepteur différentiel à étalement de spectre. Du fait de sa parfaite symétrie, le composant émet et reçoit des signaux très semblables de sorte qu'un certain nombre de circuits utilisés dans la voie d'émission peuvent être partagés avec certains circuits de la voie de réception. C'est ce que représente la figure 6 qui montre un émetteur-récepteur différentiel conforme à l'invention, tout au moins dans sa partie amont, jusqu'au composant 80, la partie aval étant la même que sur la figure 1 (sorties S1, S2, multiplieur 38 et étage en bande de base).

L'émetteur-récepteur représenté sur la figure 6 comprend, d'une façon générale, un certain nombre de moyens qu'on trouve dans tout émetteur-récepteur, à savoir :

A) une voie d'émission comprenant :

- des moyens 130 pour coder une information D en symboles binaires ayant une certaine durée T,
- un filtre ayant une réponse impulsionnelle qui est une séquence pseudoaléatoire de durée égale à la durée T d'un symbole d'information binaire,
- des moyens pour transposer le signal à fréquence intermédiaire en un signal de radiofréquence, ces moyens comprenant un oscillateur local 110 et un mélangeur 112,
- un amplificateur radiofréquence $102_2$, un filtre passe bande 104 et une antenne d'émission 100,

B) une voie de réception comprenant :

- une antenne de réception 100 et un amplificateur radiofréquence $102_1$,
- des moyens pour transposer le signal de radiofréquence en un signal de fréquence intermédiaire,
- un dispositif de traitement des signaux de fréquence intermédiaire comprenant des moyens aptes à effectuer une corrélation entre le signal à fréquence intermédiaire et la séquence pseudoaléatoire utilisée à l'émission,
- des moyens de démodulation et de traitement du signal démodulé (non représenté sur la figure 6 mais sur la figure 1), cet étage restituant l'information D utilisée à l'émission.

L'émetteur-récepteur différentiel de la figure 6 est caractérisé par le fait qu'il comprend le composant émetteur-réceptuer 80 qui a été décrit plus haut, ce composant 80 étant utilisé dans sa voie d'émission TR3, F3 pour produire le signal de fréquence intermédiaire à étalement de spectre et dans sa voie de réception TR1, F1, TR2, F2 comme dispositif de traitement du signal à fréquence intermédiaire apte à effectuer une corrélation avec la séquence pseudo-aléatoire utilisée à l'émission.

Par ailleurs, l'émetteur-récepteur de la figure 6 est caractérisé par le fait que les moyens 110, 112 de la voie d'émission pour transposer le signal à fréquence intermédiaire en signal de radiofréquence sont les mêmes que les moyens de la voie de réception pour transposer le signal de radiofréquence en signal de fréquence intermédiaire.

Quant à l'antenne 100 de la voie d'émission, elle est commune avec l'antenne de la voie de réception, cette antenne commune étant reliée aux moyens communs de transposition de fréquence 110, 112 par un amplificateur de réception $102_1$ et un amplificateur d'émission $102_2$ en parallèle. Un premier commutateur I1 est prévu pour relier l'antenne commune 100 soit à l'amplificateur de réception $102_1$, soit à l'amplificateur d'émission $102_2$. Un second commutateur I2 est également prévu pour relier, en synchronisme avec le premier, soit l'amplificateur de réception $102_1$, soit l'amplificateur d'émission $102_2$ aux moyens communs 110, 112 de transposition de signal.

Par ailleurs, un filtre passe-bande 104 peut être prévu juste après l'amplificateur $102_2$.

Dans le mode de réalisation illustré, l'émetteur-récepteur comprend en outre :

- un amplificateur à fréquence intermédiaire 114,
- un filtre passe bande à fréquence intermédiaire 116,
- un troisième commutateur I3 reliant l'entrée dudit amplificateur 114 soit aux moyens communs de transposition de fréquence 110, 112, soit à la voie d'émission TR3, F3 du composant 80,
- un quatrième commutateur I4 pour relier en synchronisme avec le troisième commutateur I3, la sortie du filtre passe bande 116, soit à la voie de réception TR1, F1, TR2, F2, soit aux moyens communs de transposition de fréquence 110, 112.

Un circuit de contrôle automatique de gain 118 est également prévu pour régler le gain de l'amplificateur 114 à partir du signal reçu.

La structure représentée sur la figure 6 fait apparaître clairement l'utilisation de plusieurs sous ensemble aussi bien à l'émission qu'à la réception. Le passage du mode émission en mode réception se fait grâce aux commutateurs I1 à I5. Ces commutateurs peuvent être des interrupteurs à diode, de manière à ce que le passage d'un mode à l'autre se fasse rapidement. Sur le schéma de la figure 6, tous les interrupteurs sont en position réception (R).

En mode réception, le signal fourni par l'antenne est amplifié par $102_1$ et filtré par 106 dont la bande est égale ou supérieure à Bes. En mode émission, le signal en sortie du mélangeur 112 est filtré par 106, amplifié par $102_2$ puis filtré de nouveau par 104 avant d'être émis par l'antenne 100. Le filtre 104 est nécesaire pour éviter tout lobe secondaire qui pourrait être produit par les non linéarités dans l'amplificateur $102_2$.

Le mélangeur 112 fonctionne en conversion vers le bas ("downconverter") en mode réception, c'est-à-dire que le signal présent à l'entrée est mélangé avec le signal de l'oscillateur local et que la fréquence du signal fourni en fréquence intermédiaire est la différence des fréquences entre la fréquence de l'oscillateur local et la radiofréquence, la fréquence intermédiaire étant inférieure à la fréquence de l'oscillateur local et à la radiofréquence, la fréquence FI étant inférieure aux fréquences OL et RF.

Il fonctionne en conversion vers le haut ("upconverter") en mode émission et le signal présent à l'entrée est mélangé avec le signal de l'oscillateur local pour produire le signal radiofréquence dont la fréquence est supérieure à la fréquence intermédiaire.

Les étages en fréquence intermédiaire fonctionnent de la manière suivante en mode réception.

Le signal en fréquence intermédiaire en sortie 112 est amplifié par 114 puis filtré par 116 dont la bande est supérieure à Bes, avant d'être injecté à l'entrée du composant 80 dont le fonctionnement détaillé a été décrit plus haut. Le circuit de contrôle de gain 118 ajuste automatiquement le gain de l'amplificateur à fréquence intermédiaire 114 de manière à ce que la puissance du signal à fréquence intermédiaire à l'entrée réception du composant filtré soit constante. Le signal est appliqué aux deux électrodes d'entrée TR1, TR2 du composant 80. Les deux sorties S1 et S2 du filtre sont identiques à un retard près, la valeur de ce retard est T, durée du symbole binaire transmis, comme déjà indiqué.

Dans le mode émission, les commutateurs I1 à I5 sont en position E. On utilise, pour produire le signal d'émission, la voie émission du composant 80. Cette voie est strictement identique à la première voie de réception du même composant utilisé à la différence près que la réponse impulsionnelle de la voie en émission est la séquence pseudoaléatoire elle-même et non la séquence pseudoaléatoire inversée dans le temps.

Si $I_E(t)$ est cette réponse impulsionnelle, on peut donc écrire

$$I_E(t) = I_1(T-t)$$

Si ce filtre émission est attaqué par une impulsion de DIRAC $\delta(t)$ à son entrée, la sortie du filtre vaudra

$$S_E(t) = \delta(t) * I_E(t) = I_E(t).$$

Le composant à ondes acoustiques de surface F3 permet donc de produire directement le signal à fréquence intermédiaire modulé par la séquence pseudoaléatoire, sous réserver d'injecter à son entrée une impulsion de très courte durée. La modulation par les données binaires à émettre est obtenue en inversant la polarité de cette impulsion.

Le filtre F3 a donc, à son entrée, des impulsions positives ou négatives, suivant la polarité des données D à émettre. Ces impulsions sont séparées d'un temps T égal à la durée du symbole binaire. Cette durée T est bien évidemment égale aussi à la durée de la réponse impulsionnelle du filtre F3.

En mode émission, le gain de l'amplificateur 114 est fixe et préréglé à l'aide d'un potentiomètre 120. On peut envisager d'utiliser cette entrée de commande de gain de l'amplificateur 114 pour régler la puissance d'émission soit à l'aide de tensions calibrées, soit à l'aide d'une boucle de contrôle automatique de gain dont la consigne d'entrée serait la puissance du signal émis par l'antenne.

## Revendications

1. Composant pour émetteur-récepteur différentiel de signaux à étalement de spectre par séquence directe, comprenant une voie de réception constituée par :

   - un premier corrélateur (TR1, F1) apte à effectuer la corrélation entre un signal appliqué à son entrée et une séquence pseudoaléatoire identique à une séquence ayant servi dans une voie d'émission,
   - un second corrélateur (TR2, F2) différencié uniquement par rapport au premier par le fait que le signal en sortie de ce corrélateur est retardé d'une période (T) correspondant à la durée d'un symbole d'information binaire reçu, les premier et second corrélateurs (TR1, F1) (TR2, F2) étant des filtres dont la réponse impulsionnelle est la séquence pseudoaléatoire utilisée dans la voie d'émission mais renversée dans le temps,

   caractérisé en ce qu'il comprend en outre ladite voie d'émission comprenant un filtre (F3) ayant une réponse impulsionnelle qui est ladite séquence pseudoaléatoire, le filtre (F3) de la voie d'émission étant constitué par un dispositif à ondes acoustiques de surface avec un transducteur d'entrée (TR3) et un transducteur de sortie (F3), le dispositif à ondes acoustiques de surface (TR3, F3) de la voie d'émission et le dispositif à ondes acoustiques de surface (TR1, F1) du premier corrélateur de la voie de réception étant disposés sensiblement symétriquement l'un de l'autre sur un même substrat piézoélectrique ($70_1$).

2. Composant pour émetteur-récepteur différentiel selon la revendication 1, caractérisé par le fait que le transducteur de sortie (F3) de la voie d'émission est réalisé sous la forme d'un peigne interdigité ayant une longueur telle que le temps mis par les ondes acoustiques pour le traverser est égal à la période (T) correspondant à la durée (T) d'un symbole d'information binaire émis et reçu.

3. Emetteur-récepteur différentiel à étalement de spectre par séquence directe, comprenant :

    A) une voie d'émission comprenant :

- des moyens (130) pour coder une information (D) en symboles binaires ayant une certaine durée (T),
- un filtre ayant une réponse impulsionnelle qui est une séquence pseudoaléatoire de durée égale à la durée (T) d'un symbole d'information binaire,
- des moyens (110, 112) pour transposer le signal à fréquence intermédiaire en un signal de radiofréquence,
- une antenne d'émission (100),

    B) une voie de réception comprenant :

- une antenne de réception (100) et un amplificateur radiofréquence (102$_2$),
- des moyens (110, 112) pour transposer le signal de radiofréquence en un signal de fréquence intermédiaire,
- un dispositif de traitement des signaux de fréquence intermédiaire comprenant des moyens (TR1, F1, TR2, F2) aptes à effectuer une corrélation entre le signal à fréquence intermédiaire et la séquence pseudoaléatoire utilisée à l'émission,
- des moyens de démodulation (38) et de traitement du signal démodulé (42, 44, 46, 52) cet étage restituant l'information (D) utilisée à l'émission,

cet émetteur-récepteur différentiel étant caractérisé par le fait qu'il comprend le composant émetteur-récepteur (80) selon l'une quelconque des revendications 1 et 2, ce composant (80) étant utilisé dans sa voie d'émission (TR3, F3) pour produire le signal à fréquence intermédiaire à étalement de spectre, ce composant (80) étant par ailleurs utilisé dans sa voie de réception (TR1, F1)(TR2, F2) comme dispositif de traitement du signal à fréquence intermédiaire apte à effectuer une corrélation avec la séquence pseudoaléatoire utilisée à l'émission, cet émetteur-récepteur étant en outre caractérisé par le fait que les moyens (110, 112) de la voie d'émission pour transposer le signal à fréquence intermédiaire en signal de radiofréquence sont les mêmes que les moyens (110, 112) de la voie de réception pour transposer le signal de radiofréquence en signal de fréquence intermédiaire.

4. Emetteur-récepteur différentiel selon la revendication 3, caractérisé par le fait que l'antenne (100) de la voie d'émission est commune avec l'antenne (100) de la voie de réception, cette antenne commune (100) étant reliée aux moyens communs de transposition de fréquence (110, 112) par un amplificateur de réception (102$_1$) et un amplificateur d'émission (102$_2$) en parallèle, un premier commutateur (I1) étant prévu pour relier l'antenne commune (100) soit à l'amplificateur de réception (102$_1$), soit à l'amplificateur d'émission (102$_2$), un second commutateur (I2) étant prévu pour relier, en synchronisme avec le premier, soit l'amplificateur de réception (102$_1$), soit l'amplificateur d'émission (102$_2$) aux moyens communs (110, 112) de transposition de fréquence.

5. Emetteur-récepteur selon la revendication 3, caractérisé par le fait qu'il comprend en outre :

- un amplificateur à fréquence intermédiaire (114),
- un filtre passe bande à fréquence intermédiaire (116),
- un troisième commutateur (I3) reliant l'entrée dudit amplificateur (114) soit aux moyens communs de transposition de fréquence (110, 112), soit à la voie d'émission (TR3, F3) du composant (80),
- un quatrième commutateur (I4) pour relier en synchronisme avec le troisième commutateur (I3), la sortie du filtre passe bande (116), soit à la voie de réception (TR1, F1) (TR2, F2), soit aux moyens communs de transposition de fréquence (110, 112).

**Patentansprüche**

1. Bauelement für diffentiellen Sende-Empfänger von Direktsequenz-Spreizspektrumsignalen, einen Empfangskanal umfassend, gebildet durch:

- einen ersten Korrelator (TR1, F1), fähig die Korrelation zwischen einem an seinen Eingang gelegten Signal und einer pseudozufälligen Sequenz durchzuführen, die identisch ist mit einer Sequenz, die in einem Sendekanal gedient hat,
- einen zweiten Korrelator (TR2, F2), der sich von dem ersten nur dadurch unterscheidet, daß das Ausgangssignal dieses Korrelators um eine Periode (T) verzögert ist, die der Dauer eines empfangenen binären Informationssignals entspricht, wobei der erste und der zweite Korrelator (TR1, F1) (TR2, F2) Filter sind, deren Impulsreaktion die in dem Sendekanal benutzte pseudozufällige Sequenz ist, aber zeitlich umgekehrt,

**dadurch gekennzeichnet,**

daß es außerdem den genannten Sendekanal mit einem Filter (F3) umfaßt, dessen Impulsreaktion die genannte pseudozufällige Sequenz ist, wobei das Filter (F3) des Sendekanals gebildet wird durch eine Oberflächenschallwellenvorrichtung mit einem Eingangstransducer (TR3) und einem Ausgangstransducer (F3) und die Oberflächenschallwellenvorrichtung (TR3, F3) des Sendekanals und die Oberflächenschallwellenvorrichtung (TR1, F1) des ersten Korrelators des Empfangskanals im wesentlichen symmetrisch zueinander auf demselben piezoelektrischen Substrat ($70_1$) angeordnet sind.

2. Bauelement nach Anspruch 1, dadurch gekennzeichnet, daß der Ausgangstransducer (F3) des Sendekanals in Form eines interdigitierten Kamms ausgeführt ist, der eine solche Länge hat, daß die Zeit die die Schallwellen benötigen, um ihn zu durchqueren, gleich der Periode (T) ist, die der Dauer (T) eines gesendeten und empfangenen binären Informationssymbols ist.

3. Differentieller Sende-Empfänger mit Direktsequenz-Spreizspektrum, umfassend:

   A) einen Sendekanal, umfassend:

   - Einrichtungen (130) zum Codieren einer Information (D) in binäre Symbole mit einer bestimmten Dauer (T),
   - ein Filter mit einer Impulsreaktion, die eine pseudozufällige Sequenz mit einer Dauer gleich der Dauer (T) eines binären Informationssymbols ist,
   - Einrichtungen (110, 112), um das Zwischenfrequenzsignal in ein Hochfrequenzsignal umzusetzen,
   - eine Sendeantenne (100),

   B) einen Empfangskanal, umfassend:

   - eine Empfangsantenne (100) und einen Hochfrequenzverstärker ($100_2$),
   - Einrichtungen (110, 112), um das Hochfrequenzsignal in ein Zwischenfrequenzsignal umzusetzen,
   - eine Verarbeitungsvorrichtung der Zwischenfrequenzsignale, Einrichtungen (TR1, F1, TR2, F2) umfassend, die fähig sind, eine Korrelation zwischen dem Zwischenfrequenzsignal und der beim Senden benutzten pseudozufälligen Sequenz durchzuführen,
   - Einrichtungen (38) zur Demodulation und Verarbeitung des demodulierten Signals (42, 44, 46, 52), wobei diese Stufe die beim Senden verwendete Information (D) wiederherstellt,

**dadurch gekennzeichnet,**

daß er das Sende-Empfänger-Bauelement (80) nach einem der Ansprüche 1 und 2 umfaßt, wobei dieses Bauelement (80) im Sendekanal (TR3, F3) dieses differentiellen Sende-Empfängers verwendet wird, um das Spreizspektrum-Zwischenfrequenzsignal zu erzeugen, und dieses Bauelement (80) außerdem in seinem Empfangskanal (TR1, F1) (TR2, F2) als Verarbeitungsvorrichtung des Zwischenfrequenzsignals verwendet wird, fähig eine Korrelation mit der Pseudozufallsequenz durchzuführen, die beim Senden benutzt wird, wobei dieser Sende-Empfänger außerdem dadurch gekennzeichnet ist, daß die Einrichtungen (110, 112) des Sendekanals zum Umsetzen des Zwischenfrequenzsignals in ein Hochfrequenzsignal dieselben sind wie die Einrichtungen (110, 112) des Empfangskanals zum Umsetzen des Hochfrequenzsignals in ein Zwischenfrequenzsignal.

4. Differentieller Sende-Empfänger nach Anspruch 3, dadurch gekennzeichnet, daß die Antenne (100) des Sendekanals zugleich die Antenne (100) des Empfangskanals ist, wobei diese gemeinsame Antenne (100) durch einen Empfangsverstärker ($102_1$) und einen Sendeverstärker ($102_2$) parallel mit den gemeinsamen Frequenzumsetzungseinrichtungen (110, 112) verbunden ist und dabei ein erster Schalter (I1) vorgesehen ist, um die gemeinsame Antenne (100) entweder mit dem Empfangsverstärker ($102_1$) oder mit dem Sendeverstärker ($102_2$) zu verbinden, und ein zweiter Schalter (I2) vorgesehen ist, um, synchronisiert mit dem ersten, entweder den Empfangsverstärker ($102_1$) oder den Sendeverstärker ($102_2$) mit den gemeinsamen Frequenzumsetzungseinrichtungen (110, 112) zu verbinden.

5. Sende-Empfänger nach Anspruch 3, dadurch gekennzeichnet, daß er außerdem umfaßt:

   - einen Zwischenfrequenzverstärker (114),
   - ein Zwischenfrequenz-Bandfilter (116),
   - einen dritten Schalter (I3), der den Eingang des genannten Verstärkers (114) entweder mit den gemeinsamen Frequenzumsetzungseinrichtungen (110, 112) oder mit dem Sendekanal (TR3, F3) des Bauelements (80) verbindet,
   - einen vierter Schalter (I4), um, synchronisiert mit dem dritten Schalter (I3), den Ausgang des Bandfilters (116) entweder mit dem Empfangskanal (TR1, F1) (TR2, F2) oder mit den gemeinsamen Frequenzumsetzungseinrichtungen (110, 112) zu verbinden.

## Claims

1. Component for a differential transmitter-receiver for signals with direct sequence spread spectrum comprising a reception channel constituted by:

   - a first correlator (TR1, F1) able to perform the correlation between a signal applied to its input and a pseudo-random sequence identical to that used in the transmission channel,
   - a second correlator (TR2, F2) differing from the first solely by the fact that the signal at the output of said correlator is delayed by a period (T) corresponding to the duration of a received binary information symbol, the first and second correlators (TR1, F1) (TR2, F2) being filters, whose pulse response is the pseudo-random sequence used in the transmission channel, but reversed in time,

   characterized in that it also comprises the transmission channel having a filter (F3) with a pulse response which is said pseudo-random sequence, the filter (F3) of the transmission channel being constituted by a surface sound wave device with an input transducer (TR3) and an output transducer (F3), the surface sound wave device (TR3, F3) of the transmission channel and the surface sound wave device (TR1, F1) of the first correlator of the reception channel being arranged substantially symmetrical to one another on the same piezoelectric substrate ($70_1$).

2. Component for a differential transmitter-receiver according to claim 1, characterized in that the output transducer (F3) of the transmission channel is implemented in the form of a split finger transducer having a length such that the time taken by the acoustic waves for passing through it is equal to the period (T) corresponding to the duration (T) of a transmitted and received binary information symbol.

3. Direct sequence spread spectrum differential transmitter-receiver incorporating:

   (A) a transmission channel incorporating:

   - means (130) for encoding an information (D) into binary symbols having a certain duration (T),
   - a filter having a pulsed response which is a pseudo-random sequence of duration equal to the duration (T) of a binary information symbol,
   - means (110, 112) for converting the intermediate frequency signal into a radio-frequency signal,
   - a transmission antenna (100),

   B) a reception channel incorporating:

   - a reception antenna (100) and a radio-frequency amplifier (102),
   - means (110, 112) for converting the radio-frequency signal into an intermediate frequency signal,
   - a device for processing the intermediate frequency signals incorporating means (TR1, F1, TR2, F2) able to perform a correlation between the intermediate frequency signal and the pseudo-random sequence used on transmission,
   - means (38) for demodulating and processing the demodulated signal (42, 44, 46, 52), said stage restoring the information (D) used on transmission,

   said differential transmitter-receiver being characterized in that it comprises the transmitter-receiver component (80) according to either of the claims 1 and 2, said component (80) being used in its transmission channel (TR3, F3) for producing the spread spectrum intermediate frequency signal, said component (80) also being used in its reception channel (TR1, F1) (TR2, F2) as the processing device of the intermediate frequency signal able to perform a correlation with the pseudo-random sequence used on transmission, said transmitter-receiver also being characterized in that the means (110, 112) of the transmission channel for converting the intermediate frequency signal into a radio-frequency signal are the same as the means (110, 112) of the reception channel for converting the radio-frequency signal into an intermediate frequency signal.

4. Differential transmitter-receiver according to claim 3, characterized in that the antenna (100) of the transmission channel is common to the antenna (100) of the reception channel, said common antenna (100) being connected to common frequency converting means (110, 112) by a reception amplifier ($102_1$) and a transmission amplifer ($102_2$) connected in parallel, a first switch (I1) being provided for connecting the common antenna (100) either to the reception amplifier ($102_1$) or to the transmission amplifier ($102_2$), a second switch ($I_2$) being provided for connecting, in synchronism with the first, either the reception amplifier ($102_1$), or the transmission amplifier ($102_2$) to the common frequency converting means (110, 112).

5. Transmitter-receiver according to claim 3, characterized in that it also comprises:

   - an intermediate frequency amplifier (114),

- an intermediate frequency band-pass filter (116),
- a third switch I3) connecting the input of said amplifier (114) either to the common frequency converting means (110, 112), or to the transmission channel (TR3, F3) of the component (80),
- a fourth switch (I4) for connecting, in synchronism with the third switch (I3), the output of the band-pass filter (116) either to the reception channel (TR1, F1) (TR2, F2) or to the common frequency converting means (110, 112).

FIG.1

FIG. 2

EP 0 604 294 B1

FIG. 3

FIG. 4

FIG. 5

EP 0 604 294 B1

FIG. 6

EP 0 604 294 B1